# EUROPEAN PATENT APPLICATION

(11) **EP 4 306 988 A1**
(43) Date of publication of application: **17.01.2024**
(21) Application number: 22184160.4
(22) Date of filing: 11.07.2022
(51) Int. Cl.: G01S 7/41, G01S 13/52, G01S 13/72, G01S 13/931, G01S 17/931

(54) **INTEGRATION OF RADAR DETECTION FOR PREDICTION**

(71) Applicant: Aptiv Technologies Limited, St. Michael (BB)
(72) Inventor: Zhao, Kun, 40235 Düsseldorf (DE); Kurbiel, Thomas, 45359 Essen (DE)
(74) Representative: Samson & Partner Patentanwälte mbB

(57) **Abstract**

The subject disclosure pertains to advanced driving assistance systems and autonomous driving systems for vehicles. For example, the subject disclosure provides a computer-implemented method for a driving assistance system of a vehicle. The method comprises determining a plurality of detection points obtained by a sensor, the detection points being associated with a plurality of segments of a region of interest for the vehicle and representing objects in the plurality of segments. The method further comprises, for each segment of the plurality of segments, encoding the plurality of detection points associated to said segment into a latent feature of said detection point, and determining a fixed feature for said segment based on the latent features of the plurality of detection points. The method further comprises encoding the fixed features of the plurality of segments to obtain a spatial correlation of static detection points among the segments, the spatial correlation of static detection points indicating a characteristic of a driving corridor for the vehicle. The spatial correlation of static detection points is then provided to the driving assistance system.

## Description

### FIELD

The subject disclosure generally relates to advanced driving assistance systems and autonomous driving systems for vehicles. More specifically, the subject disclosure relates to methods, apparatuses, and systems for integrating radar detection for prediction for advanced driving assistance systems and autonomous driving systems.

### BACKGROUND

In recent years, development in the field of driver assistance systems and systems for autonomous driving has advanced. The use of such systems in vehicles serves to support the driver and, for example, to detect and prevent dangerous situations. Driving assistance systems are now ubiquitous and, in some cases, even mandatory. The known driving assistance systems use incoming data such as data from sensors such as cameras, laser scanners, radar sensors, etc. and determine from this, usually using techniques of machine learning, outputs in the form of control information for controlling the vehicle or other information for display to the driver of the vehicle. However, so far not all inputs from sensors, in particular radar sensors, are usable for processing in driving assistance systems due to their peculiarities and characteristics such as randomness.

The subject disclosure therefore aims to provide improvements for existing driving assistance systems and their detection mechanisms.

### SUMMARY

The subject disclosure is directed to improve known prediction mechanisms. The main aspects are set out by the independent claims.

In this respect, according to a first aspect, a computer-implemented method for a driving assistance system of a vehicle is provided. The method comprises determining a plurality of detection points obtained by a sensor, the detection points being associated with a plurality of segments of a region of interest for the vehicle and representing objects in the plurality of segments. The method further comprises, for each segment of the plurality of segments, encoding the plurality of detection points associated to said segment into a latent feature of said detection point, and determining a fixed feature for said segment based on the latent features of the plurality of detection points. The method further comprises encoding the fixed features of the plurality of segments to obtain a spatial correlation of static detection points among the segments, the spatial correlation of static detection points indicating a characteristic of a driving corridor for the vehicle and providing the spatial correlation of static detection points to the driving assistance system.

In some embodiments, the method further comprises receiving the plurality of detection points from the sensor of the vehicle.

In some embodiments, the method further comprises dividing the region of interest into the plurality of segments. In such embodiments, dividing the region of interest may optionally comprise dividing the region of interest into the plurality of segments in a longitudinal direction of a detection area of the sensor, each segment having a given size in the longitudinal direction.

In some embodiments, each of the plurality of detection points is represented by a feature vector having a fixed number of features obtained by the sensor and the latent feature is represented by a feature vector having a number of features, equal or greater than the fixed number of features, e.g., obtained by the sensor.

In some embodiments, the method further comprises, for each segment of the plurality of segments of the region of interest for the vehicle, determining whether a number of detection points obtained by the sensor exceeds a given maximum, and obtaining the plurality of detection points from among the number of detection points obtained by the sensor such that the plurality of detection points corresponds, in number, to the given maximum. In such embodiments, obtaining the plurality of detection points may optionally comprise one or more of selecting, based on one or more given criteria, the plurality of detection points from among the number of detection points, and performing padding with respect to the number of detection points.

In some embodiments, determining the fixed feature for said segment comprises applying, on the latent features of the plurality of detection points, a symmetric function to obtain the fixed feature for said segment. In such embodiments, the symmetric function may comprise a max pooling function.

In some embodiments, encoding each of the plurality of detection points and determining the fixed feature for said segment comprises using a segment encoding module of a machine learning network for encoding each detection point into the latent feature and applying the symmetric function to obtain the fixed feature for said segment. In such embodiments, the segment encoding module may be trained for one or more of the plurality of segments.

In some embodiments, the method further comprises concatenating the fixed features of the plurality of segments in an order of the segments.

In some embodiments, encoding the fixed features of the plurality of segments comprises using a correlation encoding module of the machine learning network. In such embodiments, the correlation encoding module may be trained for the plurality of segments and/or the spatial correlation of the static detection points.

In some embodiments, the sensor is a radar sensor of the vehicle, and the plurality of detection points comprises a plurality of reflection points corresponding to radar reflections from the objects.

In some embodiments, the method further comprises one or more of controlling the vehicle in accordance with control information, the control information determined by the driving assistance system based at least in part on the spatial correlation of static detection points, and providing visualization information relating to the characteristic of the driving corridor, the visualization information determined by the driving assistance system based at least in part on the spatial correlation of static detection points.

According to a second aspect, a processing apparatus is provided. The processing apparatus comprises a processor configured to perform the method according to the first aspect and embodiments thereof. Alternatively, or additionally, the processing apparatus may comprise a processor and a memory including computer program code. The computer program code, when executed with the processor, causes the processing apparatus to perform the method according to the first aspect and embodiments thereof. Alternatively, or additionally, the processing apparatus may comprise one or more means configured to perform the method according to the first aspect and embodiments thereof.

According to a third aspect, another processing apparatus is provided. The processing apparatus comprises a segment encoder to, for each segment of a plurality of segments of a region of interest for a vehicle, encode a plurality of detection points representing objects in said segment into a latent feature of said detection point, the plurality of detection points being obtained by a sensor, and determine a fixed feature for said segment based on the latent features of the plurality of detection points. The processing apparatus further comprises a correlation encoder to encode the fixed features of the plurality of segments to obtain a spatial correlation of static detection points among the segments, the spatial correlation of static detection points indicating a characteristic of a driving corridor for the vehicle. The processing apparatus further comprises an interface to provide the spatial correlation of static detection points to a driving assistance system.

According to a fourth aspect, a driving assistance system for a vehicle is provided. The driving assistance system comprises the processing apparatus according to the second and/or third aspect. An autonomous driving system for a vehicle may also be provided with the processing apparatus according to the second and/or third aspect.

According to a fifth aspect, a vehicle is provided with a sensor for detecting objects in a region of interest, and a driving assistance system according to the fourth aspect. Alternatively, or additionally, the vehicle may comprise the sensor for detecting objects in a region of interest and the autonomous driving system.

According to a sixth aspect, a computer program product is provided. The computer program product comprises instructions which, when executed by a computer, cause the computer to carry out the method according to the first aspect and embodiments thereof.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings, and claims.

### BRIEF DESCRIPTION OF THE FIGURES

A better understanding of the subject disclosure can be obtained when the following detailed description of various exemplary embodiments is considered in conjunction with the accompanying drawings, in which:
FIG. 1 illustrates an example of different types of inputs used in conjunction with driving assistance systems according to exemplary embodiments of the subject disclosure.
FIG. 2 illustrates an exemplary region of interest according to exemplary embodiments of the subject disclosure.
FIG. 3 is a basic flow chart of the method for a driving assistance system for a vehicle according to exemplary embodiments of the subject disclosure.
FIG. 4 illustrates an exemplary segmentation of the region of interest into a plurality of segments according to exemplary embodiments of the subject disclosure.
FIG. 5 illustrates an architecture for the exemplary method according to FIG. 3.
FIG. 6 shows an exemplary implementation of the segment encoding module according to exemplary embodiments of the subject disclosure.
FIG. 7 illustrates an exemplary architecture for integrating the exemplary method according to exemplary embodiments of the subject disclosure.
FIG. 8 is a diagrammatic representation of internal components of a computing system implementing the functionality as described herein.

### DETAILED DESCRIPTION

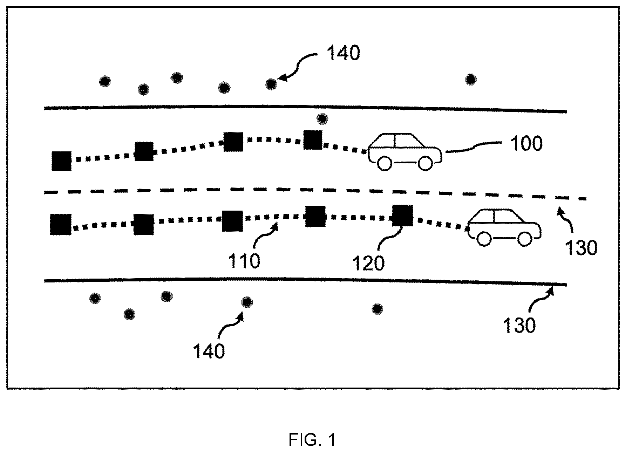

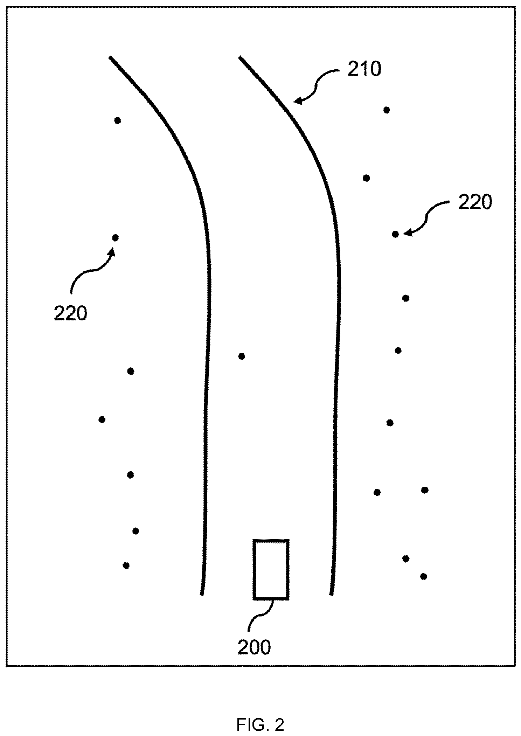

Before explaining the exemplary embodiments of the subject disclosure in more detail, certain general principles relating to the subject disclosure are briefly explained with reference to FIGs. 1 and 2 to assist in understanding the technology underlying the described examples.

Referring first to FIG. 1, an example of different types of inputs used in conjunction with driving assistance systems is shown.

A driving assistance system as used herein may have a variety of different inputs and outputs. The inputs include, for example, trajectories 110 of vehicles 100. Such trajectories 110 include a series of discrete points 120 with associated features, and lane markings 130 (shown by the boundary of a road on which the vehicle 100 is travelling). Such lane markings 130 are represented, for example, by continuous third order or polynomial functions and comprise continuous or discrete features. In addition, (static) detection points 140 from a sensor such as a radar sensor may provide useful input to the driving assistance system. Such points 140 typically have features such as position, speed, etc. However, due to the peculiarities of detection points 140, which are created by reflection of radar waves from the radar sensor on objects, it may be challenging to derive or predict information, such as a characteristic of a driving corridor of the vehicle 100, since the spatial correlation of the detection points exhibits randomness.

The randomness in number of detection points, position of detection points, etc. is illustrated in FIG. 2. The randomness is caused by the nature of radar wave scanning by a radar sensor, since, for example, objects may be occluded at a point in time and therefore there is no reflection for a detection point, whereas at another point in time there is no occlusion and therefore a detection point is obtained. In this respect, the detection points have randomness in the origin, so the exact position of these points is not consistent. In addition, occlusion, multiple reflexions, etc., result in randomness in the number of detection points, i.e., the number of detection points may vary over time, particularly in a scenario of a moving vehicle.

In the scenario of a road, the detection points typically concern reflections of objects outside the possible driving corridor of a vehicle. In FIG. 2, detection points 220 are illustrated that can be detected by a vehicle 200 or a sensor of the vehicle 200 and that are reflected from objects in the vicinity of the vehicle 200. In addition, a road 210 on which the vehicle 200 is moving or being driven is shown.

In view of the above, the subject disclosure is to provide improvements for existing driving assistance systems and their detection mechanisms. In particular, the subject disclosure is aimed at providing a solution for processing detection points from radar sensors using a machine learning-based approach. Furthermore, the subject disclosure aims at an easy (plug & play) integration of the solution into the existing driver assistance systems and their detection mechanisms. In particular, the subject disclosure considers the characteristics of static radar points.

Now, the methods for a driving assistance system of a vehicle 200 according to some embodiments of the subject disclosure will be described.

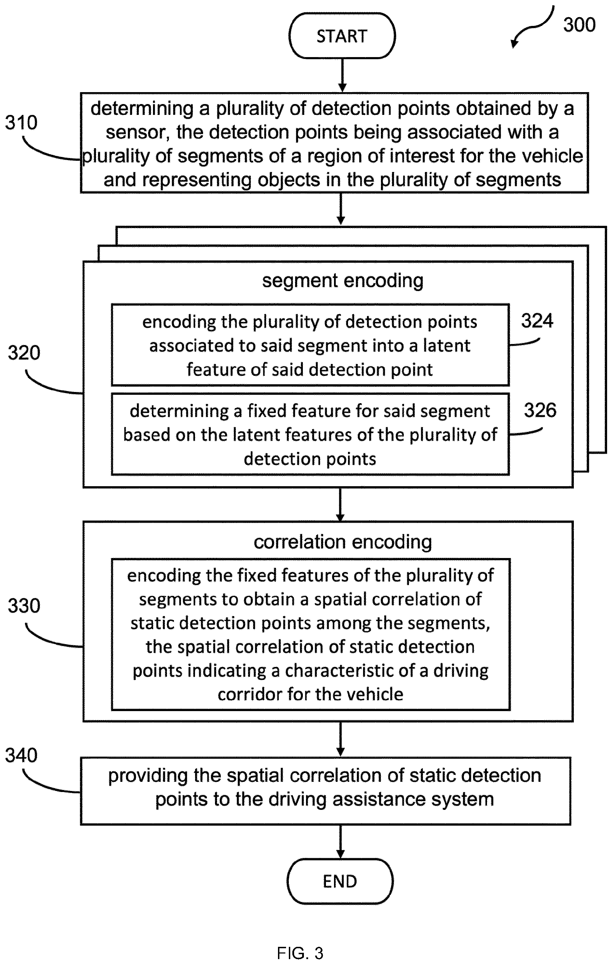

Referring now to FIG. 3, an exemplary method for a driving assistance system in a vehicle, e.g., the vehicle 100, 200, according to some embodiments is described.

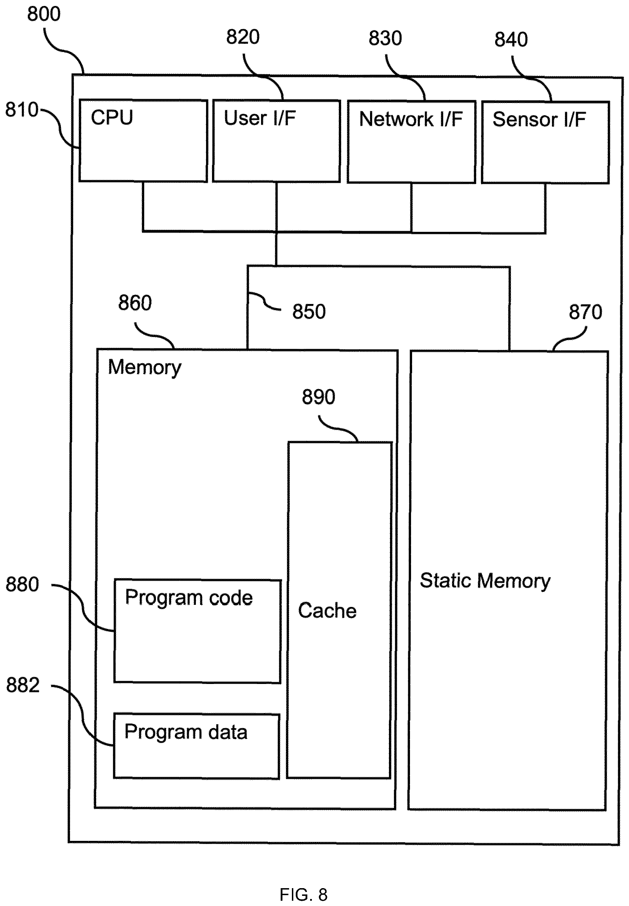

The exemplary method is implemented by a processing device such as the computing system described below with reference to FIG. 8. The computing system may be installed in the vehicle and coupled to one or more components of the vehicle, such as a sensor (e.g., a radar sensor, a light detection and ranging (Lidar) sensor, a camera, etc.), an information display device (e.g., a display, a head-up display (HUD), a navigation system or a fully digital instrument cluster, etc.), an input device (e.g., a driving wheel, speedometer, etc.), an (advanced) driving assistance system (ADAS) (e.g., a lane departure warning system, a lane change assistance system, an adaptive cruise control system, etc.), or the like, via respective interface(s). It is to be understood that the exemplary method need not be performed by a processing device in the vehicle, but may also be performed as a partially or fully distributed application using a (remote/cloud-based) computing system with which the vehicle is coupled and communicates via a network (e.g., a mobile communication system such as a 5G communication system operating according to 3GPP specifications). Although the exemplary method is described in connection with or for use in a driving assistance system (or ADAS), the skilled person understands that it is not limited thereto. Rather, the exemplary method may also be used in conjunction with an autonomous driving system (ADS).

For the purposes of this description, vehicles are typically vehicles for land transportation, such as passenger cars or trucks that participate in public road traffic and use roads. However, it is to be understood that the subject disclosure is not limited thereto and relates, for example, to other vehicles for transport on land, such as motorbikes, as well as vehicles for water and air transport. The latter may comprise, for example, the use of the exemplary method in an aircraft, where the exemplary method serves to control movement or driving of the aircraft on taxiways, runways, or the apron of airfields.

The exemplary method of FIG. 3 starts at 310 with determining a plurality of detection points. The plurality of detection points is obtained by a sensor of the vehicle such as a radar sensor. The plurality of detection points is associated with a plurality of segments of a region of interest (ROI) for the vehicle and represents objects in the plurality of segments. As will be described in more detail below, the ROI is divided into the plurality of segments.

In some embodiments, the exemplary method may include receiving the plurality of detection points from the sensor of the vehicle. The detection points represent reflection points of objects in the ROI and are obtained by the sensor by scanning a region of interest (ROI). For this purpose, the radar sensor, for example, sends electromagnetic waves (radar waves) in the direction of the ROI. The radar waves are reflected by objects (e.g., other moving or parked vehicles, guideposts, guardrails, kerbs, buildings, trees, grass, etc.) in the ROI. It should be understood here that the objects include static and/or dynamic objects in relation to the road. The radar sensor detects the reflections from the objects by receiving electromagnetic waves reflected from the objects. The reflections are received by the sensor as points and/or processed by processing devices downstream of the sensor in the form of points. These points are referred to herein as detection points.

320 with an activity referred to herein as segment encoding. This functionality is used to determine one or more representative static points for each of the plurality of segments into which the ROI with respect to the vehicle is divided. These points, hereinafter also referred to as static detection points, or their distribution in the ROI, typically indicate or represent markers at which a characteristic of the ROI can be determined. For example, in the case of a vehicle such as a passenger car or truck on a road, the static detection points indicate a characteristic of a driving corridor (i.e., the road on which the vehicle is moved or driven). As will be described in more detail below, the ROI is divided into a plurality of segments.

According to the exemplary method, the segment encoding 320 is performed for each segment of the plurality of segments of the ROI. Accordingly, the segment encoding 320 may be performed sequentially for the plurality of segments. However, it is not necessary that the processing of the segments is performed in the order of the segmentation of the ROI, for example, from the segment closest to the sensor (or the vehicle) in the ROI to the segment furthest from the sensor (or the vehicle) in the ROI. Similarly, segment encoding 320 may comprise parallel processing of segments, for example in groups of two or more adjacent segments, or even parallel processing of all segments of the plurality of segments.

For each segment, segment encoding 320 encodes one or more detection points (typically a plurality of detection points) of objects within the respective segment into what is herein referred to as a latent feature (step 324 in FIG. 3). For example, each of the plurality of detection points is encoded into a latent feature of that detection point. Latent features are generally features or feature vectors that are not directly measured by the sensors, but characteristics of the measured features inferred by the encoding.

In some embodiments, encoding the plurality of detection points in step 324 comprises using a machine learning network or a module of a machine learning network (hereinafter also referred to as a segment encoding module). The machine learning network or segment encoding module of the machine learning network is a network trained with respect to the detection points in the respective segment or in several (possibly all) of the plurality of segments. Encoding in step 324 "enriches" the detection points with additional information. In accordance with some embodiments, each detection point has a certain number of features detected or determined by the sensor or an associated processing device for a corresponding reflection from an object. Accordingly, typically all detection points obtained from the sensor have the same number of features. The features may be, for example, position, distance from the sensor, strength of reflection, etc. A detection point therefore represents a feature vector with a certain number of features. For example, the number of features may be 3. By means of encoding in step 324, which in the field of machine learning is also referred to as feature embedding, each detection point (i.e., corresponding feature vector for the detection point with the certain number of features) is encoded into a latent feature by embedding additional features. The latent feature is also a feature vector, but - in some embodiments - with a number of features (for example 5) greater than the certain number of features of the feature vector for the detection point.

In addition, segment encoding 320 includes a determination of a new feature vector, referred to herein as a fixed feature for the segment, having a certain number of features (step 326 in FIG. 3). The determination in activity 326 is based on the latent features of the plurality of capture points of the corresponding segment. The term fixed feature is used here because the result of the determination in activity 326 is a feature vector (i.e., the feature vector determined by means of the determination in activity 326) having a fixed size (i.e., fixed number of features) regardless of the actual number of detection points among the plurality of detection points in the segment or the certain number of features of the feature vector for the detection points. The fixed feature for the segment may be understood as a representative feature for the segment. Although it is described that one fixed feature is determined for a segment in activity 326, it is to be understood that more than one fixed feature may be determined for each segment.

With the determination of the fixed feature for the segment, the segment encoding 320 ends.

The exemplary method of FIG. 3 further comprises functionality 330, referred to herein as correlation encoding, for determining a spatial distribution or correlation of static detection points of the segments.

In activity 330, the correlation encoding, the fixed features of the plurality of segments determined in activity 320 are encoded to obtain a spatial correlation of static detection points among the segments. Static detection points are defined here as detection points of objects that are determined to be static with respect to the segments or the ROI. In other words, static detection points represent points that are fixed and reliable for detecting the characteristics of the environment (or the ROI). In relation to the vehicle, the static detection points or the spatial correlation thereof indicate a characteristic of a driving corridor for the vehicle. The static detection points or the spatial distribution thereof "approximate" the course of the road on which the vehicle is moving or being driven, and thus an area (referred to here as the driving corridor) in which the vehicle should move or be driven. It is to be understood that the correlation encoding in activity 330 considers the order of the segments according to the segmentation of the ROI to determine the spatial correlation of the static detection points. Typically, the correlation encoding in activity 330 considers the order of the segments in the ROI from the segment closest to the sensor (or vehicle) in the ROI to the segment furthest from the sensor (or vehicle) in the ROI. Reversing the order from the furthest segment to the closest segment is also possible.

In some embodiments, similar to the encoding in activity 324, encoding in activity 326 also comprises using a machine learning network or module of a machine learning network (hereinafter also referred to as a correlation encoding module). The machine learning network or correlation encoding module of the machine learning network is a network trained with respect to the static detection points or the spatial distribution or correlation thereof. The machine learning network containing the correlation encoding module may be the network also containing the segment encoding module; the segment encoding module and the correlation encoding module may accordingly be part of the same machine learning network. The encoding in activity 326 is to determine or derive additional information based on the fixed features among the segments. For example, the encoding in activity 326 relates to a determination which fixed features may qualify as static detection points and thus allow to determine or derive the characteristic of the driving corridor for the vehicle.

With the determination of the static detection points or the spatial correlation thereof, the correlation encoding of activity 330 ends.

In the basic flow chart of FIG. 3, the exemplary method concludes with providing (or delivering) the static detection points or the spatial correlation of the static detection points to the driving assistance system of the vehicle (activity 340). The exemplary method ends with activity 340.

As described below in some more detail, the static detection points provided or the spatial correlation thereof may be used, for example, by the driving assistance system to control the vehicle or to provide visual information (for example). Thus, the information provided by the exemplary method (e.g., the static detection points) may be used to determine control information for controlling the vehicle.

In some embodiments, the static detection points indicating a characteristic of a driving corridor for the vehicle, as described, may be used to determine a trajectory for the vehicle and derive control information therefrom to control or steer the vehicle along the trajectory. Likewise, control information may be determined that, for example, causes a steering intervention for the vehicle in such a way that the vehicle moves (further) on the road or in the driving corridor.

In other embodiments, the static detection points may be used to generate visual information representing the characteristics of the driving corridor. The visual information may, for example, be used to indicate to a driver of the vehicle, for example by means of a display (e.g., the fully digital instrument cluster mentioned above), the course of the road ahead of the vehicle. Likewise, the visual information may be used - independently of a vehicle or a driving assistance system - to show a person the characteristics or course of a road, for example by means of a head-up display (HUD). This can be useful, for example, for driving simulation, virtual driving training and/or testing/certification of vehicle components such as ADAS or ADS.

Some further embodiments of the exemplary method according to FIG. 3 are described below.

As described above, segment encoding 320 is performed for each of a plurality of segments into which the ROI is divided with respect to the vehicle. The sensor of the vehicle typically has a detection area (also referred to as sensing area) that corresponds to or includes the ROI, as assumed herein. The detection area of the sensor or the ROI is divided into the plurality of segments. The segmentation is done virtually. Typically, the segmentation of the ROI is done in a longitudinal direction of the detection area or a main detection direction of the sensor.

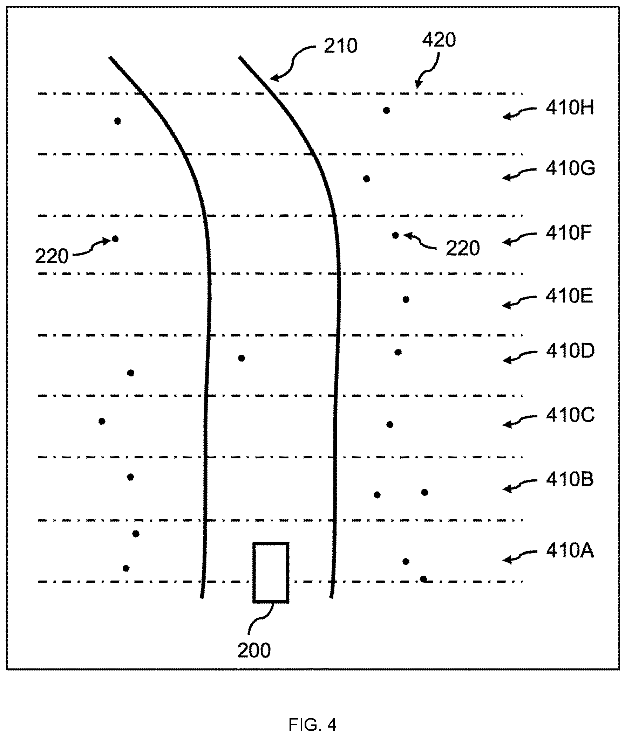

An exemplary segmentation of the ROI into a plurality of segments is shown in FIG. 4. The ROI shown in FIG. 4 corresponds to that of FIG. 2. The ROI is therefore also shown with respect to the vehicle 200 (or the sensor from that vehicle 200). In FIG. 4, the ROI is divided into 8 segments 410A - 410H, each of which is separated by a dash-dotted line 420. It should be understood that the segmentation into 8 segments is purely exemplary and the segmentation may comprise a different number of segments. Also shown in FIG. 4 is a road or driving corridor 220 on which the vehicle 200 is moving or being driven, and a plurality of detection points 230.

In some embodiments, the segmentation of the ROI into the plurality of segments is such that the segments have the same size in the longitudinal direction of the detection area or the main detection direction of the sensor, as shown in FIG. 4. However, it should be understood that the size of the segments need not be the same and may generally correspond to a given size. For example, the size may be adjusted statically or dynamically depending on one or more parameters. For example, the size of the segments may vary depending on the velocity of the vehicle. Similarly, the size of the segments may vary as a function of the distance of the segment (in the described longitudinal direction) from the sensor. For example, the size of the segments may decrease as the distance from the sensor increases to improve the determination of the static detection points.

In some embodiments, the sensor and/or a processing device coupled to the sensor may associate with the detection points detected by the sensor information relating to the segment to which the detection points belong or in which the objects causing the detection points by reflection are located. In other embodiments, the assignment of the detection points may be based on information from the sensor (e.g., coordinates of a plane with the sensor, distance to the sensor). Information about the segment to which a detection point belongs may be assigned to the detection point or provided in addition. A numbering or a unique index may be suitable for this purpose. The segment coding 320 according to the exemplary method may receive the plurality of detection points from the sensor and (together or additionally) the information about the segments to which the detection points are associated. Segment encoding 320 may then use the segment information to determine those detection points of the plurality of detection points that are associated with a segment to be subjected to segment encoding 320. In other embodiments, only those detection points of a segment that is to be subjected to the segment encoding 320 may be provided to the exemplary method as shown in FIG. 3 or to the segment encoding 320.

Furthermore, in some embodiments, a maximum number of detection points may be given for a segment for the segment encoding 320 of the exemplary method according to FIG. 3. In this regard, the exemplary method additionally comprises determining whether or not the number of detection points obtained by the sensor exceeds the maximum number. Depending on the result of the determination, the plurality of detection points for the segment encoding 320 is obtained based on the number of detection points obtained by the sensor so as to correspond in number. In other words, the plurality of detection points is either increased or decreased so that their number is equal to the maximum number.

In some embodiments, obtaining the plurality of detection points corresponding to the maximum number may comprise selecting detection points from the number of detection points obtained by the sensor. The selecting may be based on one or more predetermined criteria. For example, the selection may be based on one or more features associated with the detection points. For example, detection points with higher strength of reflection (e.g., a strength of reflection above a predetermined threshold) may be selected and thus preferred compared to detection points with lower strength of reflection. In another example, a detection point representing a group of detection points may be selected from the group of detection points having a given spatial proximity. By selecting detection points, their number is reduced to the maximum number.

In other embodiments, obtaining the plurality of detection points corresponding to the maximum number may comprise performing padding with respect to the number of detection points obtained by the sensor. Examples of padding may include the so-called zero-padding (e.g., adding detection points that do not affect segment encoding 320, and do not falsify the result from segment encoding 320) or copying detection points from the number of detection points for a segment. Padding increases the number of detection points to the maximum number.

Further, in some embodiments, the exemplary method may comprise applying a symmetric function to the latent features of the plurality of detection points in step 326. By applying the symmetric function, the fixed feature for the segment for which the segment encoding 320 is performed is determined based on the latent features. An exemplary symmetric function, which is typically used in the field of machine learning, comprises the so-called Max-pooling. Max-pooling is a sample-based discretization process with the objective to down-sample an input representation, reducing the dimensionality and allowing for assumptions to be made about features contained in the sub-regions binned.

Alternatively, or additionally, the exemplary method according to FIG. 3 may comprise concatenating the fixed features of the plurality of segments in an order of the segments. In other words, the segments or the fixed features determined therefor are reassembled in the manner and order corresponding to the segmentation of the ROI. By concatenating the fixed features each with a fixed size, a feature map with a number of channels is generated. The number of channels corresponds to the number of features (i.e., the fixed size). For example, concatenating 8 fixed features of the 8 segments as illustrated in FIG. 4, each of which has a fixed size of 5 features due to the segment encoding 320, results in a feature map with 8 fixed features each with 5 channels. For example, this results in a 1x8 feature map (i.e., 1 fixed feature per segment and 8 segments in total) with 5 channels (i.e., 5 features per fixed feature). The feature map may have the form of and/or may be stored or processed as an "image-like data structure".

It has already been described above that the machine learning network or the segment encoding module or the correlation encoding module of the machine learning network is a trained network. In some embodiments, the segment encoding 320 uses the same segment encoding module (i.e., a segment encoding module that uses the same parameters for the segments) of the network for multiple segments. In this example, segment encoding 320 is performed using a segment encoding module associated with those multiple segments for which segment encoding 320 is to be performed. It is understood that the same segment encoding module may be used for all the plurality of segments. In other examples, a different segment encoding module (i.e., different segment encoding modules that use different parameters) of the network may be used for each segment in the segment encoding 320. In such an example, the segment encoding 320 is performed using a segment encoding module associated with the segment for which the segment encoding 320 is to be performed.

In the aforementioned examples, the segment encoding module may be trained for one or more segments of the plurality of segments (i.e., with parameters for those segments). The one or more segments may be associated with the segment encoding module as described above.

The correlation encoding module used in the correlation encoding 330 may, in some embodiments, be trained for the plurality of segments and/or the sequence, for static detection points and/or the spatial correlation/distribution thereof.

The exemplary method described herein for a driving assistance system in a vehicle as well as its embodiments enable that, despite the existing randomness in the data (i.e., detection points of reflections from objects) from a (radar) sensor, information (referred to herein as the static detection points) is available or can be extracted or derived to support or improve the driving assistance system (or system for autonomous driving). The subject disclosure is therefore directed to the properties and characteristics contained in the data from the sensor.

A simple application of the exemplary method described above will now be described.

For this purpose, reference is first made again to the illustration of FIG. 4. As already described, FIG. 4 shows a simplified road scenario with a road 220 and a vehicle 200 that is also being moved or driven along the road. The detection points 230 shown are from static (but also dynamic) objects on or off the road. However, among the detection points 230 are also points on the road, which may be false detections or random conditions such as bumps on the road surface. However, as FIG. 4 shows, despite the "noise" due to the false detections, etc., a characteristic of the road such as a driving corridor for the vehicle can be derived from the longitudinal distribution of the detection points.

According to the exemplary method, at least in some embodiments, a segmentation of the ROI is performed first, i.e., the scenario shown in FIG. 4. According to the example shown, the ROI may be in front of the vehicle, i.e., in the direction of driving of the vehicle. The subject disclosure is however not limited to this, and the ROI may also be located next to or even behind the vehicle. By way of example, the ROI is segmented longitudinally, i.e., in the direction of driving of the vehicle, into a plurality of segments 410A - 410H. As described above, the size of the segments may be the same in some embodiments but may also be different. The segmentation of the ROI is shown in FIG. 4 by dash-dotted lines 420.

According to the exemplary method, the determination of the static detection points or the spatial correlation or distribution thereof is performed in two phases: segment encoding 320 and correlation encoding 330. In segment encoding 320, for each segment (i.e., for each area between two adjacent dot-dashed lines 420 in FIG. 4), a plurality of (radar) detection points 230 obtained by a (radar) sensor of the vehicle are processed. Specifically, in segment encoding 320, the plurality of detection points (i.e., each) is encoded into a latent feature of the detection point using the segment encoding module of a machine learning network described above, based on which a fixed feature for the segment is then determined. The encoding of the detection points is thereby "permutation invariant", i.e., the number of detection points and the processing order thereof in a segment have no effect on the result of the processing (i.e., on the latent feature for the segment). However, it should be understood that the detection points can also be processed in a given order, as long as this does not affect the result of the processing. In the activity of correlation encoding 330 following the segment encoding 320, using the correlation encoding module of the machine learning network described above, an encoding of the fixed features of the plurality of segments is performed to thereby obtain a (spatial) distribution of the points or a correlation among the points. The spatial distribution or correlation indicates the driving corridor for the vehicle. For the correlation encoding 330, the segments or the fixed features are first concatenated (i.e., the segments are crossed) in the order in the ROI. By means of the correlation encoding 330, the spatial correlation in the data or among the points of the segments is determined (or "learned"). The order of the segments or fixed features in the ROI is relevant here because this enables the learning of the spatial correlation.

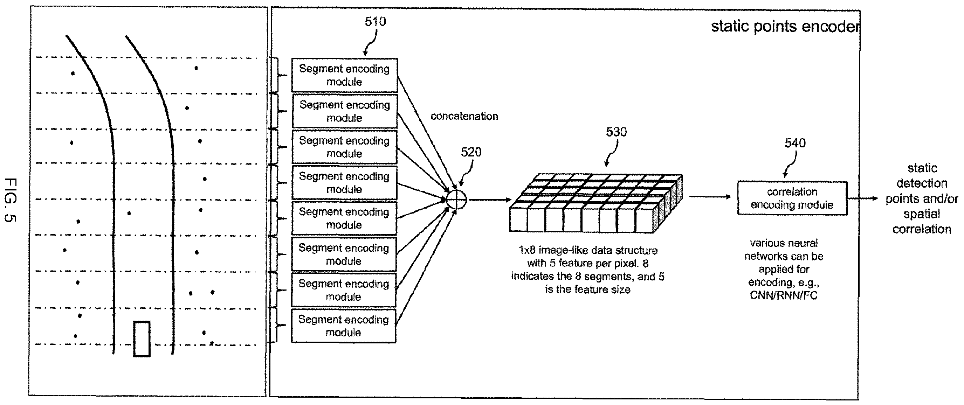

FIG. 5 illustrates an architecture for the exemplary method according to FIG. 3. FIG. 5 shows the road scenario of FIG. 4. For each segment of the plurality of segments 410A - 410H, segment encoding 320 is performed by encoding the plurality of detection points in the corresponding segment into a latent feature and then determining a fixed feature for the segment based on the latent features of the detection points in the segment. A segment encoding module 510, as described above, is used for segment encoding 320. For example, the same segment encoding module 510 (i.e., the same machine learning network component sharing the same parameters) may be used for the plurality of segments 410A - 410H. In this example, the segment coding module 510 may have been trained with data from all segments. Similarly, a different segment encoding module 510 may be used for each segment, which has been trained with the data of the respective segment. Also possible is a combination of the above examples, in which individual segments are processed with a common segment encoding module 510 and other segments are processed with different segment encoding modules 510. The outputs of the segment encoding modules 510 (i.e., the fixed features for the segments) are concatenated 520, and the result of the concatenation 520 (i.e., the crossing) leads to a structure 530 comprising the distribution of the fixed features. The structure 530 may be represented as an "image-like data structure" in which a fixed feature (i.e., a pixel in the image-like data structure) is included for each segment, each with a predetermined number of features. Thus, for 8 segments and a feature size of 5 for the fixed features, the result is a 1x8 image-like data structure with 5 channels. The result (i.e., structure 530) of concatenation 520 is subjected to correlation encoding (330 as shown in FIG. 3) using a correlation encoding module 540 that encodes the fixed features of the segments and derives (i.e., "learns") a spatial correlation or distribution of static capture points. The result is static detection points or the spatial correlation or distribution thereof, which on the one hand indicate the characteristic of the driving corridor and can be provided to the driving assistance system for further use.

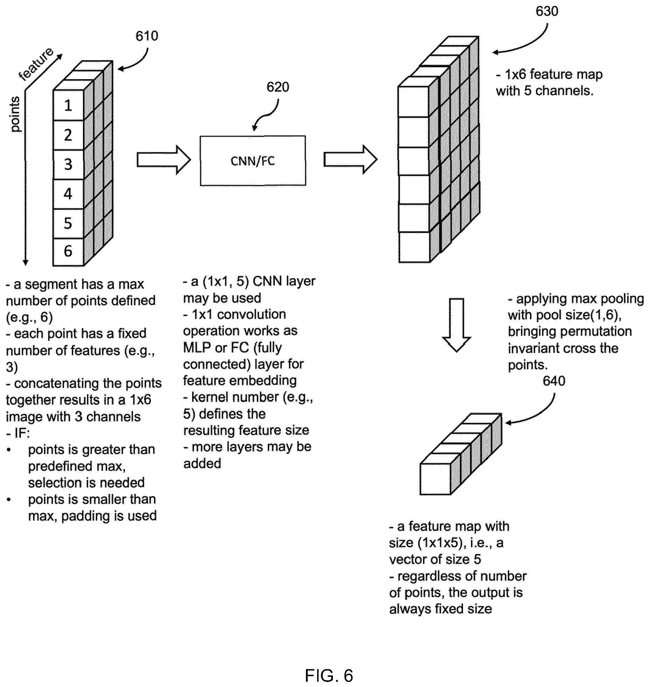

Reference is made below to FIG. 6, which shows an exemplary implementation of the segment encoding module according to exemplary embodiments of the subject disclosure. As shown in FIG. 6, the segment encoding module processes a plurality of detection points for a segment. The plurality of detection points each have a given number of features (e.g., 3 features). In addition, the number of detection points to be processed may be limited to a maximum number. As described above, a selection of detection points is performed if the number exceeds the maximum number; otherwise, i.e., if the number does not exceed the maximum number, padding is performed. In addition, the detection points in the segment are concatenated and a structure 610 similar to an image, where the detection points which represent pixels have the given number of features. In the example shown, 6 detection points are shown with 3 features each, corresponding to a 1x6 structure with 3 channels. The structure 610 is subjected to encoding 324. For example, a (1x1, 5) layer (i.e., layer of a convolutional neural network) may be used here (shown as 620 in FIG. 6), where a 1x1 convolutional operation functions like an MLP or fully connected (FC) layer for feature embedding may be used. The kernel number (e.g., 5 kernel features) defines the feature size of the latent features. Of course, other layers can be added. The result is a structure 630 of latent features, i.e., a feature map with a feature size larger than the feature size of the detection points. For example, the result may be a structure 630 in the form of a 1x6 feature map with 5 channels (i.e., 6 latent features with 5 features each). Based on the structure 630 (or latent features), a fixed feature 640 is determined. This can be done, as described above, for example by applying a symmetric function such as max pooling. In the example shown, max pooling can be used with a pool size of (1,6), resulting in a permutation invariant cross of the latent features. The result is a fixed feature 640, i.e., a feature map with a size (e.g., 1x1x5 in this example) and thus a feature vector of size 5. The size of the fixed feature is independent of the actual number of detection points in the plurality of detection points.

In the subject disclosure, the use of a machine learning network is mentioned. Such a network may be a convolutional neural network (CNN), but also a recurrent neural network (RNN) or fully connected (FC) network. In particular, a CNN may be used for the segment encoding module and the correlation encoding module, which may be effectively used to learn a longitudinal distribution of detection points, in particular due to the described segment-wise processing of the detection points.

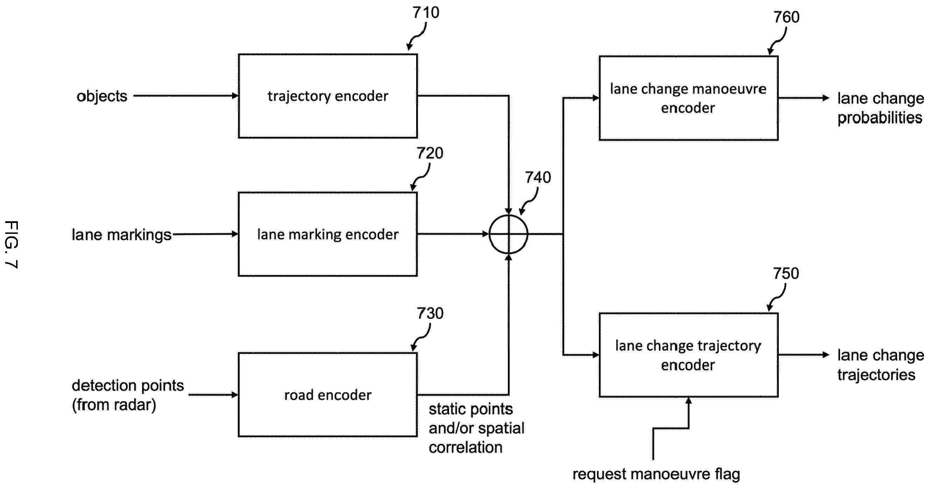

The exemplary method described above according to FIG. 3 and embodiments thereof may be integrated into an architecture of a driving assistance system. An exemplary architecture for integrating the exemplary method is shown in FIG. 7. In FIG. 7, a component (shown as a road encoder 730) is shown that performs the exemplary method for determining static detection points and the correlation/distribution thereof based on a plurality of (radar) detection points. Other components (shown by way of example only) include a trajectory encoder 710 that encodes a plurality of detected objects into a trajectory, and a lane marking encoder 730 that encodes lane markings. The outputs of the components 710 - 730 shown are combined (block 740). The combination of outputs may be provided to a lane change manoeuvre encoder 750 for determining lane change characteristics and/or a lane change trajectory encoder 760 for determining lane change trajectories based on a manoeuvre request. The static detection points or the correlation/distribution thereof improve the determination of lane change characteristics by the lane change manoeuvre encoder 750 and the determination of lane change trajectories by the lane change trajectory encoder 760 by providing (additional) information on the driving corridor or characteristics thereof, as described above.

FIG. 8 is a diagrammatic representation of internal components of a computing system 800 implementing the functionality as described herein.

The computing system 800 may be in the vehicle and includes at least one processor 810, a user interface 820, a network interface 830 and a main memory 860, that communicate with each other via a bus 850. Optionally, the computing system 800 may further include a static memory 870 and a disk-drive unit (not shown) that also communicate with each via the bus 850. A video display, an alpha-numeric input device and a cursor control device may be provided as examples of the user interface 820.

Furthermore, the computing system 800 may also comprise a sensor interface 840 to communicate with a sensor of the vehicle. Alternatively, the computing system 800 may communicate with the sensor via the network interface 830. The sensor obtains the plurality of detection points (i.e., reflection points from objects) from the ROI for the vehicle. The sensor may be a radar sensor, a laser scanner, a light detection and ranging (Lidar) sensor, or the like. The sensor may be directed into any direction of interest to the vehicle such as the front direction (i.e., the driving direction). The computing system 800 may also be connected to database systems (not shown) via the network interface 830, wherein the database systems store additional data needed for providing the functionalities as described herein.

The main memory 860 may be a random-access memory (RAM) and/or any further volatile memory. The main memory 860 may store program code 880 for performing the exemplary method described herein. The memory 860 may also store additional program data 882 required for providing the functionalities as described herein. Part of the program data 882 and/or the program code 880 may also be stored in a separate, e.g., cloud memory and executed at least in part remotely. In such an exemplary embodiment, the memory 860 may store the segment encoding module and the correlation encoding module as described herein in a cache 890.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the art. In particular, the examples are offered by way of illustrating the principles, and to provide a number of specific methods and arrangements for putting aspects of the subject disclosure into effect.

In certain embodiments, the functions and/or acts specified in the flow charts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the subject disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated all the subject disclosure and while these embodiments have been described in considerable detail, it is not the intention to restrict or in any way limit the scope of the appended claims to such detail. Additional advantages and modifications will readily appear to those skilled in the art. The subject disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computer-implemented method for a driving assistance system of a vehicle, comprising:
- determining a plurality of detection points obtained by a sensor, the detection points being associated with a plurality of segments of a region of interest for the vehicle and representing objects in the plurality of segments;
- for each segment of the plurality of segments,
• encoding the plurality of detection points associated to said segment into a latent feature of said detection point, and
• determining a fixed feature for said segment based on the latent features of the plurality of detection points;
- encoding the fixed features of the plurality of segments to obtain a spatial correlation of static detection points among the segments, the spatial correlation of static detection points indicating a characteristic of a driving corridor for the vehicle; and
- providing the spatial correlation of static detection points to the driving assistance system.

2. The computer-implemented method of claim 1, further comprising:
- receiving the plurality of detection points from the sensor of the vehicle.

3. The computer-implemented method of claim 1 or 2, further comprising:
- dividing the region of interest into the plurality of segments.

4. The computer-implemented method of claim 3, wherein dividing the region of interest comprises:
- dividing the region of interest into the plurality of segments in a longitudinal direction of a detection area of the sensor, each segment having a given size in the longitudinal direction.

5. The computer-implemented method of any one of claims 1 to 4, wherein each of the plurality of detection points is represented by a feature vector having a fixed number of features obtained by the sensor and the latent feature is represented by a feature vector having a number of features, equal or greater than the fixed number of features.

6. The computer-implemented method of any one of claims 1 to 5, further comprising:
- for each segment of the plurality of segments of the region of interest for the vehicle,
• determining whether a number of detection points obtained by the sensor exceeds a given maximum; and
• obtaining the plurality of detection points from among the number of detection points obtained by the sensor such that the plurality of detection points corresponds, in number, to the given maximum.

7. The computer-implemented method of claim 6, wherein obtaining the plurality of detection points comprises:
• selecting, based on one or more given criteria, the plurality of detection points from among the number of detection points; and/or
• performing padding with respect to the number of detection points.

8. The computer-implemented method of any one of claims 1 to 7, wherein determining the fixed feature for said segment comprises applying, on the latent features of the plurality of detection points, a symmetric function to obtain the fixed feature for said segment.

9. The computer-implemented method of claim 8, wherein encoding each of the plurality of detection points and determining the fixed feature for said segment comprises using a segment encoding module of a machine learning network for encoding each detection point into the latent feature and applying the symmetric function to obtain the fixed feature for said segment.

10. The computer-implemented method of any one of claims 1 to 9, wherein the sensor is a radar sensor of the vehicle, and the plurality of detection points comprises a plurality of reflection points corresponding to radar reflections from the objects.

11. The computer-implemented method of any one of claims 1 to 10, further comprising:
- controlling the vehicle in accordance with control information, the control information determined by the driving assistance system based at least in part on the spatial correlation of static detection points; and/or
- providing visualization information relating to the characteristic of the driving corridor, the visualization information determined by the driving assistance system based at least in part on the spatial correlation of static detection points.

12. A processing apparatus comprising a processor configured to perform the method of any one of claims 1 to 11.

13. A driving assistance system for a vehicle comprising the processing apparatus of claim 12.

14. A vehicle comprising:
a sensor for detecting objects in a region of interest; and
a driving assistance system of claim 13.

15. A computer program product comprising instructions which, when the computer program product is executed by a computer, cause the computer to carry out the method of any one of claims 1 to 11.
